# EUROPÄISCHE PATENTSCHRIFT

(11) **EP 0 636 666 B1**
(45) Veröffentlichungstag und Bekanntmachung des Hinweises auf die Patenterteilung: **24.05.2000**
(21) Anmeldenummer: 94111339.1
(22) Anmeldetag: 21.07.1994
(51) Int. Cl.: C09B 67/22, C09B 67/20, C08K 5/00

(54) **Pigmentzubereitungen mit Perylenderivaten als Dispergiermittel**
Pigment preparations with perylene derivatives as dispersing agent
Préparations pigmentaires contenant des dérivés de pérylène en tant qu'agent dispersant

(30) Priorität: 28.07.1993 DE 4325247
(43) Veröffentlichungstag der Anmeldung: 01.02.1995
(73) Patentinhaber: BASF Aktiengesellschaft, 67063 Ludwigshafen (DE)
(72) Erfinder: Hetzenegger, Josef, Dr., D-67227 Frankenthal (DE); Henning, Georg, Dr., D-67061 Ludwigshafen (DE); Erk, Peter, Dr., D-67227 Frankenthal (DE)

(56) Entgegenhaltungen:
- EP-A- 0 360 182
- EP-A- 0 504 872
- FR-A- 2 380 813
- CHEMICAL ABSTRACTS, vol. 108, no. 14, 4.April 1988 Columbus, Ohio, US; abstract no. 114284z, M. TOSHIYUKI; T. MATSUMASA 'Method for dispersing perylene and perinone pigments in nonaqueous varnishes.' Seite 97; & JP-A-62 197 461 (SANYO COLOR WORKS, LTD.)
- BULLETIN OF THE CHEMICAL SOCIETY OF JAPAN, Bd. 54, Nr. 5, Mai 1981 TOKYO JP, Seiten 1575-1576, Y. NAGAO ET. AL. 'Synthesis and Reactions of Perylenecarboxylic Acid Derivatives. X. Synthesis of N-Alkyl-3,4-perylenedicarboximide.'
- BULLETIN OF THE CHEMICAL SOCIETY OF JAPAN, Bd. 52, Nr. 6, April 1979 Seiten 1723-1726, Y. NAGAO; T. MISONO 'Synthesis and Reactions of Perylencarboxylic Acid Derivatives. VI. Sulfonation of 3,4-Perylendicarboximide'

## Beschreibung

Die vorliegende Erfindung betrifft neue Pigmentzubereitungen, enthaltend
(a) mindestens ein organisches Pigment;
(b) mindestens ein Perylenderivat der allgemeinen Formel I 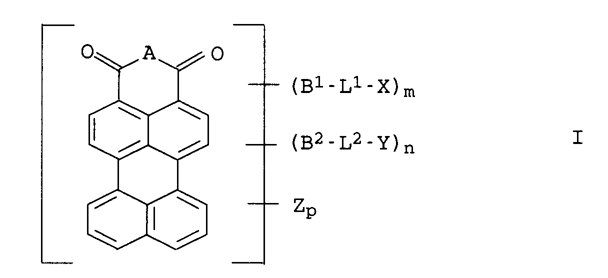 in der die Variablen folgende Bedeutung haben:
   - A: einen bivalenten Rest -O-, -CH₂- oder -NR¹-wobei R¹ folgende Bedeutung hat:
   Wasserstoff;
   C₁-C₂₂-Alkyl;
   C₅-C₆-Cycloalkyl;
   Aryl, das durch Halogen, C₁-C₄-Alkyl, C₁-C₄-Alkoxy und/oder Phenylazo ein- oder mehrfach substituiert sein kann;
   - B¹, B²: unabhängig voneinander eine chemische Bindung oder einen bivalenten Rest -O-, -CH₂-, -NR²-, -S-, -CO-, -SO₂- oder -SO₂-NH-
   wobei R² Wasserstoff oder C₁-C₆-Alkyl bedeutet;
   - L¹, L²: unabhängig voneinander eine chemische Bindung, Phenylen oder C₁-C₈-Alkylen;
   - X: -SO₃^{⊖}Ka^{⊕}
   wobei Ka^{⊕} folgende Bedeutung hat:
   H^{⊕} oder das Äquivalent eines Metallkations;
   ein Ammoniumkation ^{⊕}N(R³)₄
   wobei die Reste R³ gleich oder verschieden sein können und folgende Bedeutung haben:
   Wasserstoff;
   C₁-C₃₀-Alkyl oder C₃-C₃₀-Alkenyl, deren Kohlenstoffkette jeweils durch eine oder mehrere Gruppierungen -O-, -S- oder -NR²- unterbrochen sein kann und die jeweils durch C₁-C₆-Alkoxy, Amino, Hydroxy und/oder Carboxy substituiert sein können, und wobei zwei der Alkyl- oder Alkenylreste R³ auch unter Ausbildung eines das Stickstoffatom und gegebenenfalls weitere Heteroatome enthaltenden, 5- bis 7-gliedrigen Rings miteinander verbunden sein können;
   C₅-C₈-Cycloalkyl oder Phenyl, die jeweils durch C₁-C₆-Alkyl, C₁-C₆-Alkoxy, Amino, Halogen, Hydroxy und/oder Carboxy substituiert sein können, und wobei das Kohlenstoffgerüst der Cycloalkylreste R³ auch durch eine oder mehrere Gruppierungen -O-, -S- oder -NR²-unterbrochen sein kann;
   - Y: -CO₂Ka^{⊕};
   - Z: Chlor oder Brom;
   - m: 0 bis 4, wobei die Reste -B¹L¹X für m>1 gleich oder verschieden sein können;
   - n: 0 oder 1, wobei die Summe (m+n) 1 bis 4 bedeutet;
   - p: 0 bis 4, wobei die Reste Z für p>1 gleich oder verschieden sein können:
   als Dispergiermittel;
(c) gewünschtenfalls weitere für Pigmentzubereitungen übliche Zusatzstoffe.

Weiterhin betrifft die Erfindung die Verwendung dieser Pigmentzubereitungen zum Pigmentieren von hochmolekularen organischen Materialien.

Die bei der Synthese und den verschiedenen Finishverfahren erhaltenen organischen Pigmente weisen bei der Einarbeitung in hochmolekulare organische Materialien vielfach Mängel auf. Ursache hierfür ist zum einen die schlechte Dispergierbarkeit der Pigmente und zum anderen die Unverträglichkeit der dispergierten Pigmente mit dem Anwendungsmedium. In Lacken und Druckfarben führt dies beispielsweise zu Einbußen in der Koloristik, z.B. Verminderung der Farbstärke und Veränderung des Farbtons und der Sättigung, Problemen in der Glanzgebung und zur Verschlechterung der rheologischen Eigenschaften. Bei Einarbeitung der Pigmente in Kunststoffteile beobachtet man neben einer Beeinträchtigung der Koloristik zusätzlich Veränderungen der mechanischen Eigenschaften der Kunststoffteile.

Bekanntermaßen wird versucht, die anwendungstechnischen Eigenschaften der Pigmente durch Belegung mit Additiven zu verbessern. Neben farblosen, sowohl niedermolekularen als auch höhermolekularen Additiven werden in zunehmendem Maße auch Pigmentderivate, die teilweise ebenfalls farbig sind, eingesetzt. So werden in der EP-A-504 872 innere Salze von Perylentetracarbonsäurediimiden für diesen Zweck beschrieben.

Die Behandlung der Pigmente mit diesen Derivaten führt in vielen Fällen jedoch nicht zu einem zufriedenstellenden Ergebnis. So weisen vor allem hochpigmentierte Lacke nach wie vor Mängel im Fließverhalten und in der Koloristik auf, die auf eine unzureichende Stabilisierung der Pigmente im Bindemittel zurückzuführen sind.

Die Erfindung lag daher die Aufgabe zugrunde, Pigmentzubereitungen bereitzustellen, die günstige anwendungstechnische Eigenschaften aufweisen.

Demgemäß wurden die eingangs definierten Pigmentzubereitungen gefunden.

Weiterhin wurde die Verwendung dieser Pigmentzubereitungen zum Färben von hochpolymeren organischen Materialien gefunden.

Als Komponente (a) der erfindungsgemäßen Pigmentzubereitungen kommen alle organischen Pigmente in feinteiliger Form in Betracht. Geeignete Pigmentklassen sind beispielsweise Monoazo-, Disazo-, Anthrachinon-, Anthrapyrimidin-, Chinacridon-, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron-, Triphenylmethan- und Thioindigopigmente sowie Metallkomplexe dieser Pigmente. Im einzelnen seien z.B. genannt:
- - Monoazopigmente:: C.I. Pigment Brown 25; C.I. Pigment Orange 5, 36 und 67;
C.I. Pigment Red 3, 48:4, 52:2, 251, 112 und 170;
C.I. Pigment Yellow 1, 3, 73, 74, 65, 97, 151 und 154;
- - Disazopigmente:: C.I. Pigment Red 144 und 166;
C.I. Pigment Yellow 12, 17, 83 und 113;
- - Anthrachinonpigmente:: C.I. Pigment Yellow 147 und 177;
C.I. Pigment Violet 31;
- - Anthrapyrimidinpigmente:: C.I. Pigment Yellow 108;
- - Chinacridonpigmente:: C.I. Pigment Red 122, 202 und 20;
C.I. Pigment Violet 19;
- - Chinophthalonpigmente:: C.I. Pigment Yellow 138;
- - Dioxazinpigmente:: C.I. Pigment Violet 23 und 27;
- - Flavanthronpigmente:: C.I. Pigment Yellow 24;
- - Indanthronpigmente:: C.I. Pigment Blue 60 und 64;
- - Isoindolinpigmente:: C.I. Pigment Orange 69;
C.I. Pigment Red 260;
C.I. Pigment Yellow 139;
- - Isoindolinonpigmente:: C.I. Pigment Orange 61;
C.I. Pigment Red 257;
C.I. Pigment Yellow 109, 110 und 173;
- - Perinonpigmente:: C.I. Pigment Orange 43;
C.I. Pigment Red 194;
- - Perylenpigmente:: C.I. Pigment Black 31;
C.I. Pigment Red 123, 149, 178, 179, 190 und 224;
C.I. Pigment Violet 29;
- - Pyranthronpigmente:: C.I. Pigment Orange 51;
C.I. Pigment Red 216;
- - Phthalocyaninpigmente:: C.I. Pigment Blue 15, 15:1, 15:2, 15:3, 15:4, 15:6 und 16;
C.I. Pigment Green 7 und 36;
- - Triphenylmethanpigmente:: C.I. Pigment Blue 61 und 62.

Bevorzugte Komponenten (a) sind Perylenpigmente, insbesondere z.B. solche der Formel II 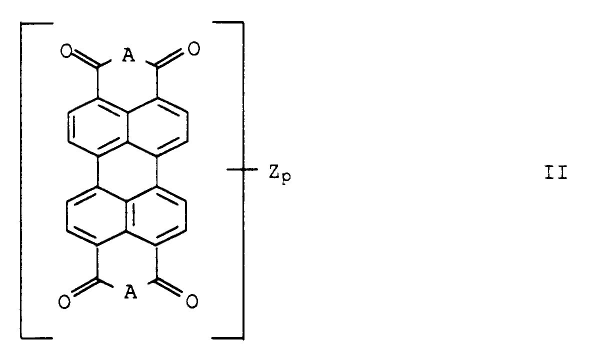 in der die Variablen die oben genannte Bedeutung haben.

Besonders bevorzugt sind Perylenpigmente, die im Kern keine Substituenten tragen (p=0) . Dabei sind diejenigen Pigmente, die als Rest -A- eine Gruppierung -NR²-, vor allem mit R² gleich Wasserstoff, Methyl, 4-Ethoxyphenyl, 3,5-Dimethylphenyl oder 4-Phenylazophenyl, ganz besonders bevorzugt. Beispielsweise seien C.I. Pigment Red 179 (R² : CH₃) und C.I. Pigment Violet 29 (R² : H) genannt.

Die als Komponente (b) in den erfindungsgemäßen Pigmentzubereitungen eingesetzten Perylenderivate der Formel I sind bekannt oder nach bekannten Methoden herzustellen (s. z.B. Bulletin of the Chemical Society of Japan, 52, 1723-1726 (1979), D-RP 411 217 und 486 491 und Y. Nagao und T. Misono, Shikizai Kyokai Shi 49, 29 (1976) und Yuki Gosei Kagaku Kyokai Shi 29, 317-319 (1971).

Geeignete Komponenten (b) sind Perylenderivate I, bei denen die Variable A -CH₂-, bevorzugt -O- sowie besonders bevorzugt -NR¹-bedeutet.

Geeignete Reste R¹ sind dabei Wasserstoff, C₁-C₂₂-Alkyl, insbesondere C₁-C₁₈-Alkyl, C₅-C₈-Cycloalkyl, insbesondere C₅-C₆-Cycloalkyl, und Aryl, wie Naphthyl und insbesondere Phenyl, die durch Halogen, wie Chlor und Brom, C₁-C₄-Alkyl, wie vor allem Methyl, C₁-C₄-Alkoxy, wie besonders Methoxy und Ethoxy, und/oder Phenylazo ein- oder mehrfach substiutiert sein können.

Als C₁-C₂₂-Alkylgruppen seien beispielsweise genannt: Methyl, Ethyl, Propyl, Isopropyl, Butyl, Isobutyl, sec.-Butyl, tert.-Butyl, Pentyl, Isopentyl, Neopentyl, tert.-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecyl, Pentadecyl, Hexadecyl, Heptadecyl, Octadecyl, Talgalkyl (C₁₆/C₁₈-Gemisch), Nonadecyl, Eicosyl, Behenyl.

Besonders bevorzugte Reste R¹ sind Wasserstoff und C₁-C₆-Alkyl.

Geeignete Gruppierungen B¹ und B² bedeuten unabhängig voneinander einen bivalenten Rest -O-, -CH₂-, -NR²- (R²: Wasserstoff, C₁-C₆-Alkyl), -S-, -CO-, -SO₂- oder -SO₂-NH-. Vorzugsweise stehen B¹ und B² jedoch für eine chemische Bindung.

Als Gruppierungen L¹ oder L² sind Phenylen, insbesondere 1,4-, auch 1,3-Phenylen, und C₁-C₈-Alkylen, wie Methylen, Ethylen, 1,2- und 1,3-Propylen, 1,2-, 1,3-, 1,4- und 2,3-Butylen, 1,2-, 1,3-, 1,4-, 1,5-, 2,3- und 2,4-Pentylen, Hexamethylen, Heptamethylen und Octamethylen, geeignet. Bevorzugt bedeuten L¹ und L² jedoch eine chemische Bindung.

Der Rest X bedeutet eine Sulfonsäuregruppierung -SO₃^{⊖}Ka^{⊕}.

Dabei steht die kationische Gruppe Ka^{⊕} besonders bevorzugt für Wasserstoff.

Weiterhin besonders geeignete Gruppen Ka^{⊕} sind die Äquivalente von Metallkationen M^{q⊕}/q wie Lithium, Strontium, Barium, Mangan, Kupfer, Nickel, Kobalt, Zink, Eisen(II) und (III) und Chrom, bevorzugt Natrium, Kalium, Magnesium, Calcium und Aluminium.

Ebenfalls geeignet sind Ammoniumkationen ^{⊕}N(R³)₄, wobei die Reste die Reste R³ gleich oder verschieden sein können und folgende Bedeutung haben: Wasserstoff;
C₁-C₃₀-Alkylgruppen, bevorzugt C₁-C₁₈-Alkylgruppen, wobei die C-Kette dieser Gruppen durch eine oder mehrere Gruppierungen -O-, -S- oder -NR²- (R²: Wasserstoff, C₁-C₆-Alkyl) unterbrochen sein kann und diese Gruppen durch C₁-C₆-Alkoxy, Amino, Hydroxy und/oder Carboxy substituiert sein können; neben den für R¹ aufgeführten, unsubstituierten Alkylgruppen seien beispielsweise genannt: 2-Methoxyethyl, 2-Ethoxyethyl, 2-Propoxyethyl, 2-Isopropoxyethyl, 2-Butoxyethyl, 2- und 3-Methoxypropyl, 2- und 3-Ethoxypropyl, 2- und 3-Propoxypropyl, 2- und 3-Butoxypropyl, 2- und 4-Methoxybutyl, 2- und 4-Ethoxybutyl, 2- und 4-Propoxybutyl, 2- und 4-Butoxybutyl, 3,6-Dioxaheptyl, 3,6-Dioxyoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 3,6,9,12-Tetraoxatridecyl und 3,6,9,12-Tetraoxatetradecyl; 2-Aminoethyl, 2- und 3-Aminopropyl, 2- und 4-Aminobutyl, 5-Aminopentyl und 6-Aminohexyl, 2-Hydroxyethyl, 2- und 3-Hydroxypropyl, 2- und 4-Hydroxybutyl, 5-Hydroxypentyl, 6-Hydroxyhexyl, 7-Hydroxyheptyl und 8-Hydroxyoctyl, Carboxymethyl, 2-Carboxyethyl, 3-Carboxypropyl, 4-Carboxybutyl und 5-Carboxypentyl;
C₃-C₃₀-Alkenylgruppen, bevorzugt C₃-C₁₈-Alkenylgruppen, deren C-Kette ebenfalls durch -O-, -S- oder -NR²- unterbrochen sein kann und die die bei den Alkylgruppen genannten Substituenten tragen können; z.B. sind zu nennen: 1- und 2-Propenyl, 1-Methyl-2-propenyl, 1-,2- und 3-Butenyl, 1,3-Butadienyl, 1-,2-,3- und 4-Pentenyl, 1,3-, 1,4- und 2,4-Pentadienyl und Oleyl; 4-Methoxy-2-butenyl, 4-Hydroxy-2-butenyl und 4-Carboxy-2-butenyl;
C₅-C₈-Cycloalkylgruppen, bevorzugt C₅-C₆-Cycloalkylgruppen, die durch C₁-C₆-Alkyl, C₁-C₆-Alkoxy, Amino, Halogen, Hydroxy und/oder Carboxy substituiert sein können und deren Kohlenstoffgerüst durch eine oder mehrere Gruppierungen -O-, -S- oder NR²- unterbrochen sein kann; als Beispiele seien genannt: Cyclopentyl, Cyclohexyl, Cycloheptyl und Cyclooctyl; 3-Methylcyclopentyl, 4-Methyl-, 4-Ethylcyclohexyl und 4-Ethoxycylohexyl; 4-Chlorcyclohexyl;
eine Phenylgruppe, die durch C₁-C₆-Alkyl, C₁-C₆-Alkoxy, Amino, Halogen, Hydroxy und/oder Carboxy substituiert sein kann; beispielhaft seien genannt: Phenyl; 2-, 3- und 4-Tolyl, Xylyl; 4-Methoxyphenyl, 4-Ethoxyphenyl, 4-Butoxyphenyl; 4-Chlorphenyl.

Von den genannten Resten R³ sind Wasserstoff, C₁-C₂₂-Alkyl, insbesondere C₁-C₁₈-Alkyl, C₂-C₁₂-Hydroxyalkyl, vor allem C₂-C₃-Hydroxyalkyl, C₃-C₁₈-Alkenyl und C₅-C₆-Cycloalkyl bevorzugt.

Außerdem können auch zwei der Alkyl- und/oder Alkenylreste R³ unter Ausbildung eines das Stickstoffatom und gegebenenfalls weitere Heteroatome wie -O-, -S-, =N- oder -NH- enthaltenden, 5- bis 7-gliedrigen Ringes wie Pyrryl, Pyridyl, Piperidyl, Morpholinyl, Pyrazolyl, Imidazolyl und Thiazolyl miteinander verbunden sein.

Beispiele für bevorzugte Ammoniumkationen sind Mono- und Dimethylammonium-, Mono- und Diethylammonium-, Mono-n-hexyl-, -n-octyl-, -n-decyl-, -n-dodecyl-, -stearyl- und -oleylammonium-, Mono-cyclohexylammonium- sowie 3-Cyclohexylaminopropyl-, Talgalkyl- und 3-Talgalkylaminpropylammonium-Kationen (Talgalkyl ≙ C₁₆/C₁₈-Gemisch; Duomeen®T, Akzo).

Der Rest Y bedeutet eine Carbonsäuregruppierung -CO₂Ka^{⊕}.

Die Perylenderivate I können bis zu vier Sulfonsäurereste -B¹L¹X (m = 0 bis 4) sowie einen oder keinen Carbonsäurerest -B²L²Y enthalten (n = 0 bis 1), wobei die Summe (m+n) 1 bis 4, bevorzugt 1 bedeutet. Besonders bevorzugt enthalten die Perylenderivate I einen Sulfonsäurerest.

Für die Säuregruppierungen im Perylengerüst geeignete Positionen sind vor allem 9 und 10.

Schließlich können die Perylenderivate I auch im Kern durch bis zu vier gleiche oder verschiedene Halogenatome Z (Chlor, Brom) substituiert sein. Bevorzugt sind jedoch die nicht durch Halogen substituierten Perylene I (p = 0).

Als ganz besonders bevorzugte Komponeten (b) seien z.B. Perylenderivate der Formel Ia 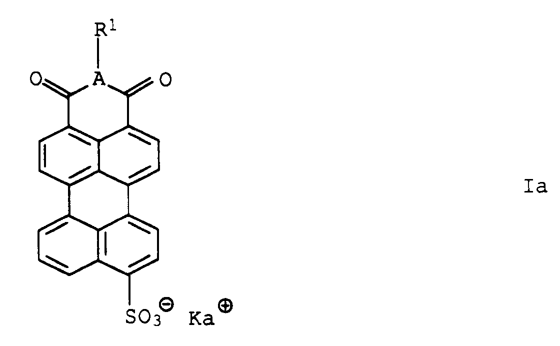 genannt, wobei R¹ für Wasserstoff oder C₁-C₆-Alkyl steht und Ka^{⊕} Wasserstoff oder die als bevorzugt aufgeführten Äquivalente von Metallkationen oder Ammoniumkationen bedeutet.

Die Perylenderivate I wirken als Dispergiermittel und werden in den erfindungsgemäßen Pigmentzubereitungen in Mengen eingesetzt, die sich an dem gewünschten Anwendungsprofil der Pigmentzubereitung orientieren. In der Regel werden, bezogen auf das Pigment (a), 0,1 bis 20 Gew.-%, vorzugsweise 0,2 bis 5 Gew.-% Dispergiermittel (b) verwendet.

Die erfindungsgemäßen Pigmentzubereitungen können je nach Anwendung noch weitere, für Pigmentzubereitungen übliche Zusatzstoffe (c) enthalten. Diese können beispielsweise zur Verbesserung der Pigmentbenetzung oder -dispergierung oder als Weichmacher oder Filmbildner dienen.

Übliche Zusätze sind zum Beispiel Harze und Harzsäuren, insbesondere auf der Basis von Kolophonium und modifiziertem Kolophonium, Tenside sowie im besonderen Polymere mit polaren Ankergruppen und Block-Copolymere.

Als Polymere sind insbesondere z.B. Polyolefine, Polyester, Polyether, Polyamide und Polyacrylate zu nennen. Beispiele für geeignete Ankergruppen sind Amin- und Ammoniumgruppen, Carbonsäure- und Carboxylatgruppen, Sulfonsäure- und Sulfonatgruppen und Phosphonsäure- und Phosphonatgruppen.

Bevorzugte Polymere sind solche mit stickstoffhaltigen Ankergruppen, vor allem Amin- und Polyalkylenimingruppen sowie Block-Copolymere mit Polyalkyleniminen wie Polyethyleniminen.

Derartige Zusatzstoffe (c) sind dem Fachmann bekannt. Sie sind zum großen Teil im Handel erhältlich (z.B. Solsperse®, ICI; Disperbyk®, Byk) und vielfach beschrieben, z.B. in Journal of Coatings Technology 58 (1986), 71, in Journal of Oil and Colour Chemical Association 1989, 293 und 1991, 204, in den DE-A-21 62 484, 22 64 176, 28 07 362 und 28 30 860 und in der EP-A-189 385.

Zweckmäßigerweise enthalten die erfindungsgemäßen Pigmentzubereitungen 50 bis 99,9 Gew.-% (a), 0,1 bis 20 Gew.-% (b) und 0 bis 30 Gew.-% (c), wobei ein Gehalt von 5 bis 20 Gew.-% der oben genannten, bevorzugten Polymere (c) besonders günstig ist.

Die Herstellung der erfindungsgemäßen Pigmentzubereitungen kann auf verschiedene Weise erfolgen. Die Zugabe des Dispergiermittels (b) (Perylenderivate I) und gegebenenfalls der Zusatzstoffe (c) kann bereits bei der Pigmentsynthese oder während eines der üblichen Formierungsschritte wie Mahlung oder Finish oder auch erst bei der Einarbeitung des Pigments in das Anwendungsmedium erfolgen.

Das Dispergiermittel (b) kann dabei in fester oder in gelöster Form dem als Feststoff oder als Dispersion in Wasser oder einem organischen Lösungsmittel vorliegenden Pigment zugegeben werden. Handelt es sich bei dem Dispergiermittel um schwerlösliche Perylensalze (I), so können diese direkt als Feststoff zugesetzt werden. Man kann jedoch auch die freie Sulfon- oder Carbonsäure oder ein entsprechendes leichtlösliches Salz einsetzen und daraus durch nachfolgende Zugabe eines Metallsalzes, eines Amins oder einer Ammoniumverbindung das schwerlösliche Salz ausfällen.

Die erfindungsgemäßen Pigmentzubereitungen zeichnen sich durch gute Anwendungseigenschaften aus. Dispergierbarkeit und Flockungsstabilität im Anwendungsmedium, und damit auch Glanz und Koloristik, und rheologische Eigenschaften des organischen Pigments (a) können verbessert werden.

Die erfindungsgemäßen Pigmentzubereitungen eignen sich hervorragend zum Färben von hochmolekularen organischen Materialien. Insbesondere seien die Herstellung von Druckfarben und Lacken und die Pigmentierung von Kunststoffen genannt.

Beispiele für zu färbende Materialien sind: natürliche Harze; Kunstharze (Polymerisations- und Kondensationsharze) wie Alkydharze, Acrylharze, Epoxidharze, Aminoformaldehydharze wie Melamin- und Harnstoffharze; Celluloseether und -ester wie Ethylcellulose, Nitrocellulose, Celluloseacetat und -butyrat; Polyurethane; Polyvinylchloride; Chlorkautschuk; Polyolefine; Polyamide; Polyester; Epoxyester; Polycarbonate; Phenoplaste; Gummi; Casein; Silikon und Silikonharze sowie auch Mischungen der genannten Materialien.

Die hochmolekularen organischen Materialien können beim Färben als plastische Massen, Schmelzen, Lösungen, Emulsionen oder Dispersionen vorliegen. Bei der Lack- und Druckfarbenherstellung verwendet man bevorzugt Lösungen oder Dispersionen. Als Beispiele für bevorzugte Lacksysteme seien Alkyd/Melaminharzlacke, Acryl/Melaminharzlacke, Celluloseacetat/Cellulosebutyratlacke und Zweikomponentenlacke auf Basis mit Polyisocyanat vernetzbarer Acrylharze genannt.

### Beispiele

### A. Herstellung von erfindungsgemäßen Pigmentzubereitungen

1. Herstellung der Pigmente (a)
   C.I. Pigment Red 179 (Beispiele 1 bis 13):
   Eine Mischung aus 50 g Perylen-3,4,9,10-tetracarbonsäuredianhydrid (wasserfeucht) und 400 ml Wasser wurde zunächst durch Zugabe von 400 g Eis auf 0°C gekühlt, dann mit 50 ml 40 gew.-%iger wäßriger Methylaminlösung versetzt, anschließend 4 h bei 20°C und 3 h bei 80°C gerührt und zuletzt auf 60°C abgekühlt.
   Das feinteilige Pigment wurde abfiltriert, mit Wasser gewaschen und bei 80°C im Vakuum getrocknet.
   Bei der Herstellung der Pigmentzubereitung von Beispiel 1 wurde das Pigment nicht getrocknet, sondern direkt als wasserfeuchter Filterkuchen eingesetzt.
   Bei der Herstellung der Pigmentzubereitungen der Beispiele 7 bis 12 wurde das getrocknete Pigment (30 g) mit 200 g Achatkugeln (0,5-2 cm Durchmesser) in einem 500 ml Achatgefäß in einer Planeten-Schnellmühle PM 4 der Firma Retsch, Haan 8 h gemahlen. Das erhaltene feinteilige Pigment hatte eine Primärteilchengröße von < 0,02 µm.
   C.I. Pigment Violet 29 (Beispiel 14):
   Die Herstellung erfolgte analog durch Umsetzen von 30 g Perylen-3,4,9,10-tetracarbonsäuredianhydrid mit Ammoniak.
   C.I. Pigment Blue 60 (Beispiele 15 und 16):
   30 g C.I. Pigment Blue 60 in der α-Modifikation (z.B. Paliogen® Blau L 6385) wurden mit 200 g Achatkugeln (0,5-2 cm Durchmesser) in einem 500 ml Achatgefäß in einer Planeten-Schnellmühle PM 4 der Fa. Retsch, Haan 10 h gemahlen.
   Das gemahlene Pigment wurde in 440 g 72 gew.-%ige Schwefelsäure eingetragen. Nach 4-stündigem Erhitzen auf 80°C wurde die Mischung auf 500 g Eis gegossen.
   Das Pigment wurde abfiltriert, mit Wasser neutral gewaschen und bei 80°C im Vakuum getrocknet.
2. Herstellung der Perylenderivate (Komponenten (b))
   (b1) N-Methylperylen-3,4-dicarbonsäureimid-9-sulfonsäure:
      Analog dem D-RP 411 217 wurde zunächst aus N,N'-Dimethylperylen-3,4,9,10-tetracarbonsäurediimid (C.I. Pigment Red 149) das N-Methylperylen-3,4,9,10-tetracarbonsäuremonoimid hergestellt, aus dem dann analog Beispiel 4 des D-RP 486 491 das N-Methylperylen-3,4-dicarbonsäureimid erhalten wurde. Dieses wurde dann analog Bull. Chem. Soc. Japan 52, 1723-1726 (1979) zur Sulfonsäure (b1) umgesetzt.
   (b2) Perylen-3,4-dicarbonsäureimid-9-sulfonsäure:
      Die Herstellung erfolgte analog Bull. Chem. Soc. Japan 52, 1723-1726 (1979) aus dem Perylen-3,4-dicarbonsäureimid.
   (b3) Perylen-3,4-dicarbonsäureimid-9-sulfonsäuredimethylditalgalkylammoniumsalz:
      400 g der Sulfonsäure (b2) und 5,65 g Dimethyl-ditalgalkylammoniumchlorid (Arquad®HC, Fa. Akzo) wurden 2 h bei einem pH-Wert von 7,0-7,2 auf 90°C erhitzt. Nach Abkühlen auf 10°C wurde der Niederschlag abfiltriert, chloridfrei gewaschen und bei 80°C im Vakuum getrocknet.
   (b4) Perylen-3,4-dicarbonsäureimid-9-sulfonsäurealuminiumsalz:
      0,6 g der Sulfonsäure, 10,0 g Al₂(SO₄)₃.18H₂O und 35,0 g NaCl wurden bei der Herstellung der Pigmentzubereitung zusammen mit dem Pigment (Beispiel 6: 15,0 g C.I. Pigment Red 179) mit 200 g Achatkugeln (0,5-2 cm Durchmesser) in einem 500 ml Achatgefäß in einer Planeten-Schnellmühle PM4 der Fa. Retsch, Haan 8h gemahlen.
      Das Mahlgut wurde in 500 ml Wasser 1 h bei 80°C gerührt, abfiltriert, chloridfrei gewaschen und bei 75°C getrocknet.
   (b5) N-Ethylperylen-3,4-dicarbonsäureimid-9-sulfonsäure:
      Analog Beispiel 4 des D-RP 486 491 wurde zunächst aus Perylen-3,4-dicarbonsäureimid das N-Ethylperylen-3,4-dicarbonsäureimid hergestellt, das dann analog Bull. Chem. Soc. Japan 52, 1723-1726 (1979) zur Sulfonsäure (b5) umgesetzt wurde.
   (b6) N-Butylperylen-3,4-dicarbonsäureimid-9-sulfonsäure:
      Die Herstellung erfolgte analog zu der Herstellung von (b5).
   (b7) Perylen-3,4-dicarbonsäureimid-9-carbonsäure:
      Die Herstellung erfolgte analog Yuki Gosei Kagaku Kyokai Shi 1971, 317-319 (Chemical Abstracts 75:140549j (1971)).
   (b8) N-Methylperylen-3,4-dicarbonsäureimid-9-sulfonsäuremono(3-talgalkylaminopropyl)ammoniumsalz:
      Eine Mischung aus 18,9 g der Sulfonsäure (b1) und 14,4 g Duomeen® T (Fa. Akzo) wurde 10 min auf 60°C erhitzt und dann auf Raumtemperatur abgekühlt.
   (b9) Perylen-3,4-dicarbonsäureimid-9-(2-sulfoethyl)-sulfonamid (-B¹-L¹-X ≙ -SO₂-NH-(CH₂)₂-SO₃H):
      Eine Mischung aus 10 g Perylen-3,4-dicarbonsäureimid und 100 g Chlorsulfonsäure wurde 20 h bei 50°C gerührt und dann auf 300 g Eis gegossen. Der Niederschlag wurde abfiltriert, mit kaltem Wasser sulfatfrei gewaschen, bei 0°C in 100 ml Wasser eingetragen und nach Zugabe von 50 g 2-Aminoethansulfonsäure 2 h bei Raumtemperatur gerührt. Anschließend wurde bis zum Erreichen eines pH-Wertes von 8 1 gew.-%ige Natronlauge zugetropft. Nach sechsstündigem Erhitzen auf 90°C wurde mit Salzsäure ein pH-Wert von 1 eingestellt. Nach weiterem einstündigen Rühren bei 90°C und Abkühlen auf Raumtemperatur wurde der Niederschlag abfiltriert, mit 5 gew.-%iger Salzsäure gewaschen, anschließend kurz in 1 l Aceton unter Rückfluß erhitzt, dann erneut abfiltriert, mit Aceton gewaschen und bei 80°C im Vakuum getrocknet.
3. Herstellung der Polymere (c)
   Polymer (c1):
      Eine Mischung aus 33,9 einer 51 gew.-%igen wäßrigen Lösung eines Polyethylenimins (mittleres Molekulargewicht ca. 1300) und 228 g 6-Caprolacton wurde unter Abdestillieren von Wasser auf 160-170°C erhitzt und 6 h bei dieser Temperatur gehalten.
      Die Aminzahl des erhaltenen Polymers betrug 0,53 mg KOH/g.
   Polymer (c2):
      Analog Beispiel 1 der DE-A-28 07 362 wurde 1 g 2-(Diethyl)aminoethanol bei 150°C zunächst mit 10 g Ethylenoxid und dann mit 20 g Propylenoxid umgesetzt.
      Das mittlere Molekulargewicht des erhaltenen Polymers betrug 1700 g/mol.
4. Herstellung der Pigmentzubereitungen
   Variante A:
      Eine Mischung aus dem bei der Synthese anfallenden, wasserfeuchten Pigment (a) (Pigment Red 179: Wassergehalt etwa 60 Gew.-%), Dispergiermittel (b) und 400 ml Wasser wurde 1 h bei 25°C gerührt. Nach Zugabe des Zusatzstoffes (c) wurde 1 h auf 80°C erhitzt. Nach Abkühlen auf 20°C wurde das Produkt abfiltriert, mit Wasser gewaschen und bei 80°C im Vakuum getrocknet.
   Variante B:
      Die Komponenten (a), (b) (und (c)) wurden mit 200 g Achatkugeln (0,5-2 cm Durchmesser) in einem 500 ml Achatgefäß in einer Planeten-Schnellmühle PM 4 der Fa. Retsch, Haan 8 h gemahlen.
   Variante C:
      Die Komponenten (a) (vorher analog B gemahlen), (b) (und (c)) wurden in einer Reibschale sorgfältig miteinander verrieben.
   Variante D:
      Eine Mischung aus den Komponenten (a) (vorher analog B gemahlen), (b) (und (c)), 400 ml Wasser und 1400 g Zirkonoxidkugeln (0,2-0,3 mm Durchmesser; Fa. Magmalox, Köln) wurde in einem 1l-Rührgefäß 1 h bei 50°C mit einer gelochten Polypropylenrührscheibe bei 2500 U/min gerührt. Nach Abtrennung der Zirkonoxidkugeln wurde das Mahlgut abfiltriert und bei 75°C getrocknet.

Weitere Angaben zur Zusammensetzung der Pigmentzubereitungen sind der unten folgenden Tabelle zu entnehmen.

### B. Beurteilung der erfindungsgemäßen Pigmentzubeeitungen

1. Beurteilung der rheologischen Eigenschaften
   Durch Anreiben des jeweiligen Pigments in einem Acryl/Melaminharzlack mit einem nichtflüchtigen Anteil von 54 Gew.-% wurden Buntlacke mit einem Pigmentgehalt von 13 Gew.-% hergestellt, die unmittelbar nach der Herstellung anhand folgender Skala bewertet wurden:
   1 gestockt
   2 leicht gestockt
   3 dickflüssig
   4 flüssig
   5 dünnflüssig

   Die zum Vergleich hergestellten, unbelegtes, aber ansonsten analog behandeltes Pigment enthaltenden Buntlacke wurden
   durchweg mit Note 1 bewertet. Die Ergebnisse der rheologischen Beurteilung sind der unten folgenden Tabelle zu entnehmen.
2. Beurteilung der koloristischen Eigenschaften
   Durch Anreiben des jeweiligen Pigments in einem Alkyl/Melaminharz mit einem nichtflüchtigen Anteil von 41 Gew.-% wurden Buntlacke mit einem Pigmentgehalt von 10 Gew.-% hergestellt.
   Die Beurteilung des Glanzes erfolgte durch Vermessen einer Purtonabrakelung (600 µm) auf Karton nach DIN 67 530.
   Unbelegtes C.I. Pigment Red 179 zeigte unter diesen Bedingungen einen Glanzwert von 50.
   Zur Beurteilung der Koloristik (Farbstärke, Farbton, Sättigung) wurden die Buntlacke mit einer 25 gew.-%igen TiO₂-Lackdispersion im Gewichtsverhältnis 1:4 gemischt und dann ebenfalls auf Karton abgerakelt (200 µm).
   Die zum Vergleich hergestellten Aufrakelungen von unbelegtes, aber analog behandeltes Pigment enthaltenden Lacken zeigten durchweg geringere Farbstärke, unreineren Farbton und geringere Farbsättigung als die unter Verwendung der erfindungsgemäßen Pigmentzubereitungen erhaltenen Aufrakelungen.
   Die Ergebnisse der koloristischen Untersuchungen sind ebenfalls in der Tabelle aufgeführt.

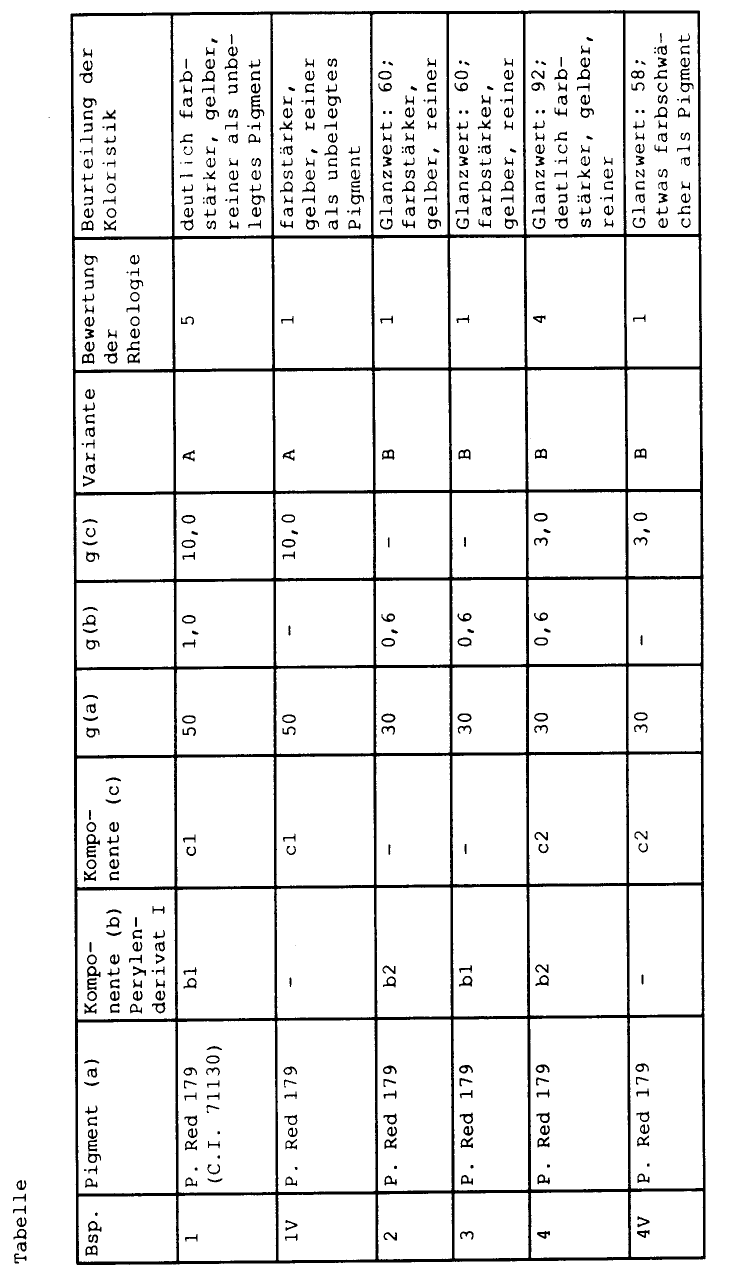

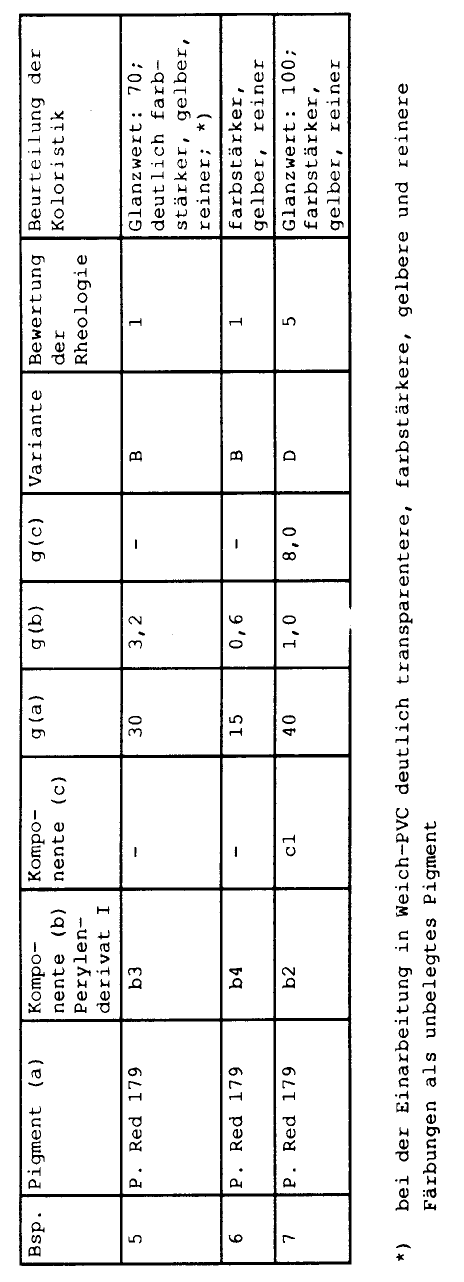

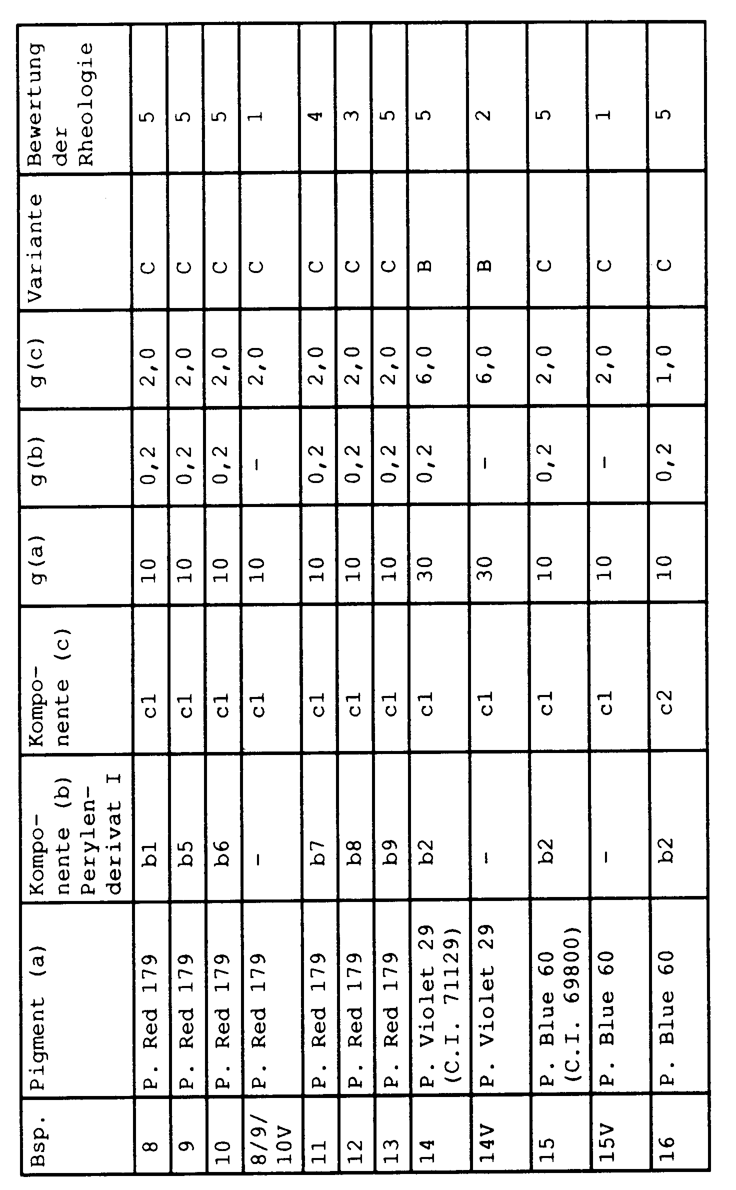

## Patentansprüche

1. Pigmentzubereitungen, enthaltend
(a) mindestens ein organisches Pigment;
(b) mindestens ein Perylenderivat der allgemeinen Formel I 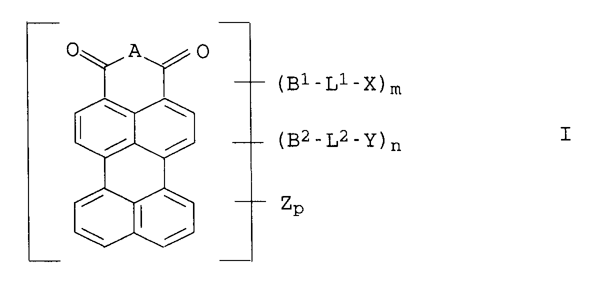 in der die Variablen folgende Bedeutung haben:
A einen bivalenten Rest -O-, -CH₂- oder -NR¹-wobei R¹ folgende Bedeutung hat:
Wasserstoff;
C₁-C₂₂-Alkyl;
C₅-C₈-Cycloalkyl;
Aryl, das durch Halogen, C₁-C₄-Alkyl, C₁-C₄-Alkoxy und/oder Phenylazo ein- oder mehrfach substituiert sein kann;
B¹, B² unabhängig voneinander eine chemische Bindung oder einen bivalenten Rest -O-, -CH₂-, -NR²-, -S-, -CO-, -SO₂- oder -SO₂-NH-
wobei R² Wasserstoff oder C₁-C₆-Alkyl bedeutet;
L¹, L² unabhängig voneinander eine chemische Bindung, Phenylen oder C₁-C₈-Alkylen;
X -SO₃^{⊖}Ka^{⊕}
wobei Ka^{⊕} folgende Bedeutung hat:
H^{⊕} oder das Äquivalent eines Metallkations;
ein Ammoniumkation ^{⊕}N(R³)₄
wobei die Reste R³ gleich oder verschieden sein können und folgende Bedeutung haben:
Wasserstoff;
C₁-C₃₀-Alkyl oder C₃-C₃₀-Alkenyl, deren Kohlenstoffkette jeweils durch eine oder mehrere Gruppierungen -O-, -S- oder -NR²- unterbrochen sein kann und die jeweils durch C₁-C₆-Alkoxy, Amino, Hydroxy und/oder Carboxy substituiert sein können, und wobei zwei der Alkyl- oder Alkenylreste R³ auch unter Ausbildung eines das Stickstoffatom und gegebenenfalls weitere Heteroatome enthaltenden, 5- bis 7-gliedrigen Rings miteinander verbunden sein können;
C₅-C₈-Cycloalkyl oder Phenyl, die jeweils durch C₁-C₆-Alkyl, C₁-C₆-Alkoxy, Amino, Halogen, Hydroxy und/oder Carboxy substituiert sein können, und wobei das Kohlenstoffgerüst der Cycloalkylreste R³ auch durch eine oder mehrere Gruppierungen -O-, -S- oder -NR²- unterbrochen sein kann;
Y -CO₂Ka^{⊕};
Z Chlor oder Brom;
m 0 bis 4, wobei die Reste -B¹L¹X für m>1 gleich oder verschieden sein können;
n 0 oder 1, wobei
die Summe (m+n) 1 bis 4 bedeutet;
p 0 bis 4, wobei die Reste Z für p>1 gleich oder verschieden sein können:
als Dispergiermittel;
(c) gewünschtenfalls weitere für Pigmentzubereitungen übliche Zusatzstoffe.

2. Pigmentzubereitungen nach Anspruch 1, die als Dispergiermittel ein Perylenderivat der Formel I enthalten, in der die Variablen folgende Bedeutung haben:
A einen bivalenten Rest -O- oder -NR¹-wobei R¹ Wasserstoff, C₁-C₁₈-Alkyl, C₅-C₆-Cycloalkyl oder Phenyl, das durch Halogen, Methyl, Methoxy, Ethoxy und/oder Phenylazo ein- oder mehrfach substituiert sein kann, bedeutet;
B¹, B² eine chemische Bindung;
L¹, L² eine chemische Bindung;
X -SO₃^{⊖}Ka^{⊕}
wobei Ka^{⊕} folgende Bedeutung hat:
H^{⊕} oder das Äquivalent eines Natrium-, Kalium-, Magnesium-, Calcium- oder Aluminiumkations;
ein Ammoniumkation ^{⊕}N(R³)₄
wobei die Reste R³ gleich oder verschieden sein können und Wasserstoff, C₁-C₂₂-Alkyl, C₂-C₁₂-Hydroxyalkyl, C₃-C₁₈-Alkenyl oder C₅-C₆-Cycloalkyl bedeuten;
Y -CO₂Ka^{⊕}
wobei Ka^{⊕} die vorstehend aufgeführte Bedeutung hat;
(m+n) 1;
p 0.

3. Pigmentzubereitungen nach Anspruch 1, die als Dispergiermittel ein Perylenderivat der Formel I enthalten, in der die Variablen folgende Bedeutung haben:
A einen bivalenten Rest -NR¹-
wobei R¹ Wasserstoff oder C₁-C₆-Alkyl bedeutet;
B¹ eine chemische Bindung;
L¹ eine chemische Bindung;
X -SO₃^{⊖}Ka^{⊕}
wobei Ka^{⊕} folgende Bedeutung hat:
H^{⊕} oder das Äquivalent eines Natrium-, Kalium-, Magnesium-, Calcium- oder Aluminiumkations;
ein Ammoniumkation ^{⊕}N(R³)₄
wobei die Reste R³ gleich oder verschieden sein können und Wasserstoff, C₁-C₁₈-Alkyl, C₂-C₃-Hydroxyalkyl, C₃-C₁₈-Alkenyl oder C₅-C₆-Cycloalkyl bedeuten;
m 1;
n 0;
p 0.

4. Pigmentzubereitungen nach den Ansprüchen 1 bis 3, die als Zusatzstoffe (c) Polymere mit polaren Ankergruppen enthalten.

5. Pigmentzubereitungen nach Anspruch 4, die als Polymere Polyolefine, Polyester, Polyether, Polyamide und/oder Polyacrylate enthalten.

6. Pigmentzubereitungen nach Anspruch 4 oder 5, bei denen die polaren Ankergruppen der Polymere Amin-, Carbonsäure-, Sulfonsäure- und/oder Phosphonsäuregruppen sind.

7. Pigmentzubereitungen nach den Ansprüchen 4 bis 6, bei denen die polaren Ankergruppen der Polymere Amingruppen sind.

8. Pigmentzubereitungen nach den Ansprüchen 1 bis 4, die
a) 50 bis 99,9 Gew.-% Pigment
b) 0,1 bis 20 Gew.-% Dispergiermittel und
c) 0 bis 30 Gew.-% übliche Zusatzstoffe
enthalten.

9. Verwendung der Pigmentzubereitungen gemäß den Ansprüchen 1 bis 8 zum Färben von hochmolekularen organischen Materialien.

## Claims

1. Pigment preparations comprising
(a) at least one organic pigment;
(b) at least one perylene derivative of the general formula I 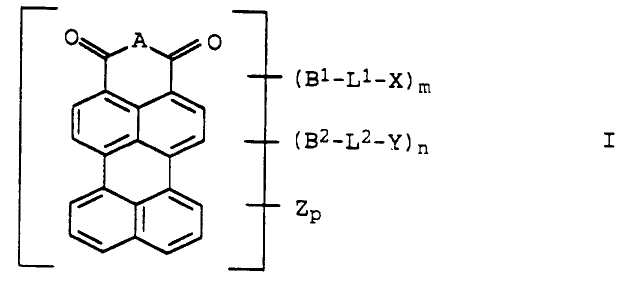 where
A is a bivalent radical -O-, -CH₂- or -NR¹-wherein R¹ is:
hydrogen;
C₁-C₂₂-alkyl;
C₅-C₈-cycloalkyl;
aryl which may be monosubstituted or polysubstituted by halogen, C₁-C₄-alkyl, C₁-C₄-alkoxy and/or phenylazo;
B¹ and B² are independently of each other a chemical bond or a bivalent radical -O-, -CH₂-, -NR²-, -S-, -CO-, -SO₂- or -SO₂-NH-wherein R² is hydrogen or C₁-C₆-alkyl;
L¹ and L² are independently of each other a chemical bond, phenylene or C₁-C₈-alkylene;
X is -SO₃^{⊖}Ka^{⊕}
wherein Ka^{⊕} is:
H^{⊕} or the equivalent of a metal cation;
an ammonium cation ^{⊕}N(R³)₄
wherein the radicals R³, which can be identical or different, have the following meanings:
hydrogen;
C₁-C₃₀-alkyl or C₃-C₃₀-alkenyl wherein the carbon chain may in each case be interrupted by one or more groups -O-, -S- or -NR²- and which may each be substituted by C₁-C₆-alkoxy, amino, hydroxyl and/or carboxyl, and wherein two of the alkyl or alkenyl radicals R³ may also be joined together to form a 5- to 7-membered ring which contains the nitrogen atom with or without further hetero atoms;
C₅-C₈-cycloalkyl or phenyl which may each be substituted by C₁-C₆-alkyl, C₁-C₆-alkoxy, amino, halogen, hydroxyl and/or carboxyl, and wherein the carbon skeleton of the cycloalkyl radicals R³ may also be interrupted by one or more groups -O-, -S- or -NR²-;
Y is -CO₂Ka^{⊕};
Z is chlorine or bromine;
m is from 0 to 4, the m>1 radicals -B¹L¹X being identical or different;
n is 0 or 1, the sum (m+n) being from 1 to 4; and
p is from 0 to 4, the p>1 radicals Z being identical or different;
as dispersant;
(c) if desired further additives customary for pigment preparations.

2. Pigment preparations as claimed in claim 1 containing as dispersant a perylene derivative of the formula I in which the variables have the following meanings:
A is a bivalent radical -O- or -NR¹-
wherein R¹ is hydrogen, C₁-C₁₈-alkyl, C₅-C₆-cycloalkyl or phenyl, which may be monosubstituted or polysubstituted by halogen, methyl, methoxy, ethoxy and/or phenylazo;
B¹ and B² are each a chemical bond;
L¹ and L² are each a chemical bond;
X is -SO₃^{⊖}Ka^{⊕}
wherein Ka^{⊕} has the following meanings:
H^{⊕} or the equivalent of a sodium, potassium, magnesium, calcium or aluminum cation;
an ammonium cation ^{⊕}N(R³)₄
wherein the radicals R³, which can be identical or different, are each hydrogen, C₁-C₂₂-alkyl, C₂-C₁₂-hydroxyalkyl, C₃-C₁₈-alkenyl or C₅-C₆-cycloalkyl;
Y is -CO₂Ka^{⊕}
wherein Ka^{⊕} is as defined above;
(m+n) is 1; and
p is 0.

3. Pigment preparations as claimed in claim 1 containing as dispersant a perylene derivative of the formula I in which the variables have the following meanings:
A is a bivalent radical -NR¹-wherein R¹ is hydrogen or C₁-C₆-alkyl;
B¹ is a chemical bond;
L¹ is a chemical bond;
X is -SO₃^{⊖}Ka^{⊕}
wherein Ka^{⊕} has the following meanings:
H^{⊕} or the equivalent of a sodium, potassium, magnesium, calcium or aluminum cation;
an ammonium cation ^{⊕}N(R³)₄
wherein the radicals R³, which can be identical or different, are each hydrogen, C₁-C₁₈-alkyl, C₂-C₃-hydroxyalkyl, C₃-C₁₈-alkenyl or C₅-C₆-cycloalkyl;
m is 1;
n is 0; and
p is 0.

4. Pigment preparations as claimed in any of claims 1 to 3 containing additives (c) comprising polymers having polar anchor groups.

5. Pigment preparations as claimed in claim 4 containing polymers comprising polyolefins, polyesters, polyethers, polyamides and/or polyacrylates.

6. Pigment preparations as claimed in claim 4 or 5 wherein the polar anchor groups of the polymers are amine, carboxylic acid, sulfonic acid and/or phosphonic acid groups.

7. Pigment preparations as claimed in any of claims 4 to 6 wherein the polar anchor groups of the polymers are amine groups.

8. Pigment preparations according to any of claims 1 to 4 containing
a) from 50 to 99.9 % by weight of pigment,
b) from 0.1 to 20 % by weight of dispersant, and
c) from 0 to 30 % by weight of customary additives.

9. The use of the pigment preparations of any of claims 1 to 8 for coloring macromolecular organic materials.

## Revendications

1. Préparations de pigment, contenant
(a) au moins un pigment organique;
(b) au moins un dérivé pérylène de formule générale I 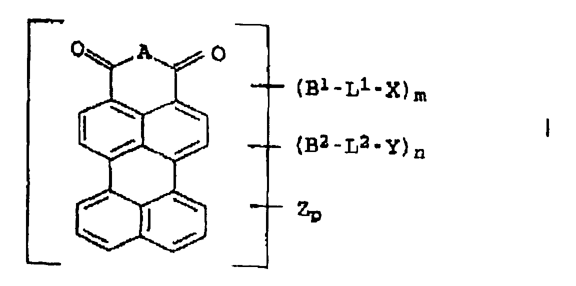 dans laquelle, les variables prennent la signification suivante :
A un résidu bivalent -O-, -CH₂- ou -NR¹ -
dans lequel R¹ prend la signification suivante:
un atome d'hydrogène;
un groupe alkyle en C₁ à C₂₂;
un groupe cycloalkyle en C₅ à C₈;
un groupe aryle qui peut être mono- ou polysubstitué par un atome d'halogène, un groupe alkyle en C₁ à C₄, alcoxy en C₁ à C₄ et/ou phénylazo;
B¹, B² représentent indépendamment l'un de l'autre une liaison chimique ou un résidu bivalent, -O-, -CH₂-, -NR²-, -S-, -CO-, -SO₂- ou -SO₂-NH-,
dans lequel R² représente un atome d'hydrogène ou un groupe alkyle en C₁ à C₆;
L¹, L² représentent indépendamment l'un de l'autre une liaison chimique, un groupe phénylène ou alkylène en C₁ à C₈;
X représente -SO₃^{⊖}Ka^{⊕}
où Ka^{⊕} prend la signification suivante :
H^{⊕} ou l'équivalent d'un cation métallique;
un cation ammonium ^{⊕} N(R³)₄
où les résidus R³ peuvent être identiques ou différents et prendre la signification suivante :
un atome d'hydrogène;
un groupe alkyle en C₁ à C₃₀ ou alcényle en C₃ à C₃₀, dont la chaîne hydrocarbonée peut être interrompue respectivement par un ou plusieurs groupements -O-, -S-ou -NR²- et qui peuvent être substitués respectivement par un groupe alcoxy en C₁ à C₆, amino, hydroxy et/ou carboxy, et où deux des résidus alkyle ou alcényle R³ peuvent également être liés entre eux en formant un cycle de 5 à 7 éléments contenant l'atome d'azote et éventuellement d'autres hétéroatomes;
un groupe cycloalkyle en C₅ à C₈ ou phényle, qui peuvent être substitués respectivement par un groupe alkyle en C₁ à C₆, alcoxy en C₁ à C₆, amino, halogéno, hydroxy et/ou carboxy, et où le squelette hydrocarboné du résidu cycloalkyle R³ peut également être interrompu par un ou plusieurs groupements -O-, -S-, ou -NR²-;
Y représente -CO₂Ka^{⊕};
Z représente un atome de chlore ou de brome;
m vaut de 0 à 4, les résidus -B¹L¹X pouvant être identiques ou différents pour m>1;
n vaut 0 ou 1, la somme (m+n) valant de 1 à 4;
p vaut de 0 à 4, les résidus Z pouvant être identiques ou différents pour p>1;
en tant que dispersant;
(c) éventuellement d'autres additifs courants pour les préparations de pigment.

2. Préparations de pigment selon la revendication 1, qui contiennent en tant que dispersant, un dérivé pérylène de formule I, dans laquelle les variables prennent la signification suivante :
A un résidu bivalent -O- ou -NR¹-
dans lequel R¹ représente un atome d'hydrogène, un groupe alkyle en C₁ à C₁₈, un groupe cycloalkyle en C₅ à C₆ ou phényle, pouvant être mono- ou polysubstitué par un atome d'halogène, un groupe méthyle, méthoxy, éthoxy et/ou phénylazo ;
B¹, B² représentent une liaison chimique ;
L¹, L² représentent une liaison chimique ;
X représente -SO₃^{⊖}Ka^{⊕}
où Ka^{⊕} prend la signification suivante :
H^{⊕} ou l'équivalent d'un cation sodium, potassium, magnésium, calcium ou aluminium ;
un cation ammonium ^{⊕} N(R³)₄ ;
où les résidus R³ peuvent être identiques ou différents et représenter un atome d'hydrogène, un groupe alkyle en C₁ à C₂₂, hydroxyalkyle en C₂ à C₁₂, alcényle en C₃ à C₁₈ ou cycloalkyle en C₅ à C₆;
Y représente -CO₂Ka^{⊕}, où Ka^{⊕} la signification indiquée ci-dessus;
(m+n) vaut 1;
p vaut 0.

3. Préparations de pigment selon la revendication 1, qui contiennent en tant que dispersant, un dérivé pérylène de formule I, dans laquelle les variables prennent la signification suivante :
A un résidu bivalent -NR¹-
dans lequel R¹ représente un atome d'hydrogène ou un groupe alkyle en C₁ à C₆ ;
B¹ représente une liaison chimique ;
L¹ représente une liaison chimique ;
X représente -SO₃^{⊖}Ka^{⊕}
où Ka^{⊕} prend la signification suivante :
H^{⊕} ou l'équivalent d'un cation sodium, potassium, magnésium, calcium ou aluminium; un cation ammonium ^{⊕} N(R³)₄
où les résidus R³ peuvent être identiques ou différents et représenter un atome d'hydrogène, un groupe alkyle en C₁ à C₁₈, hydroxyalkyle en C₂ à C₃ ou alcényle en C₃ à C₁₈ ou cycloalkyle en C₅ à C₆;
m vaut 1;
n vaut 0;
p vaut 0.

4. Préparations de pigment selon les revendication 1 à 3, qui contiennent en tant qu'additifs (c), des polymères ayant des groupes polaires d'ancrage.

5. Préparations de pigment selon la revendication 4, qui contiennent en tant que polymères, des polyoléfines, des polyesters, des polyéthers, des polyamides et/ou des polyacrylates.

6. Préparations de pigment selon la revendication 4 ou 5, dans lesquelles les groupes polaires d'ancrage des polymères sont des groupes amino, acide carboxylique, acide sulfonique et/ou acide phosphonique.

7. Préparations de pigment selon les revendications 4 à 6, dans lesquelles les groupes polaires d'ancrage des polymères sont des groupes amino.

8. Préparations de pigment selon les revendications 1 à 4, qui contiennent
a) 50 à 99,9% en poids de pigment,
b) 0,1 à 20% en poids de dispersant et
c) 0 à 30% en poids d'additifs courants.

9. Utilisation de préparations de pigment selon les revendications 1 à 8, pour colorer des matériaux organiques à masse moléculaire élevée.
